# EUROPEAN PATENT APPLICATION

(11) **EP 1 080 870 A2**
(43) Date of publication of application: **07.03.2001**
(21) Application number: 00306803.8
(22) Date of filing: 09.08.2000
(51) Int. Cl.: B29C 65/64, B29C 65/56, B65D 8/20

(54) **Method for forming a hermetic flange seal in a blow-molded plastic container**

(30) Priority: 31.08.1999 US 387697
(71) Applicant: Ontro, Inc., Poway, California 92064 (US)
(72) Inventor: Scudder, James A., Poway, California 92064 (US); Berntsen, James L., Ramona, California 92065 (US); Davern, Ann T., San Diego, California 92103 (US); Rosato, Jerine J., San Diego, California 92103 (US)
(74) Representative: Wilson, Nicholas Martin

(57) **Abstract**

A method for making a plastic container (16) with a metal lid (26) that can be used for packaging foods and beverages includes the steps of blow-molding a container body (16) having an oversized flange (20), trimming the flange (20) to size, and seaming or crimping a lid (26) over the flange (20).

## Description

### BACKGROUND OF THE INVENTION

### Field of the Invention

The present invention relates generally to containers of the type used for packaging foods and beverages and, more specifically to a method of making a plastic container having a hermetically sealed metal lid.

### Description of the Related Art

Food cans and some beverage cans have long been manufactured by attaching a metal cover or lid onto each rim of a cylindrical metal can body in a process known as seaming. In this process, a flanging machine first rolls the rim to form a flange, and then the seaming machine rolls the flange and the edge of the lid together. Plastic cans have been suggested, but seaming a metal lid onto a rim of a plastic can would not be without problems. A plastic can body unitarily formed with one or two flanges can be molded by injection blow-molding or by injection molding. Nevertheless, it would difficult to achieve a hermetic seal by crimping or seaming a lid to such a flange because the flange is often not uniform. Rather, the flange tends to have a feathered shape as an inherent result of the molding process, especially if blow-molding is used. In other words, the thickness of the flange at points more distant from the can body is less than at points closer to the can body. Without a hermetic seal, a food or beverage in the container cannot be sterilized by retort sterilization or other means after filling and can readily become contaminated. Another potential problem is that plastic food and beverage containers may comprise multiple layers, such as a so-called oxygen-barrier layer sandwiched between other layers. If the edges of an oxygen barrier layer remain unsealed and exposed to the atmosphere, the oxygen in the atmosphere can degrade the layer. The feathered shape of the flange that results from the typical molding process is likely to leave the layers within it uneven in length and thus partially exposed.

It would be desirable in a plastic can manufacturing process to form a flange that is uniform in thickness. It would further be desirable to form a flange that inhibits exposure of internal layers to the atmosphere and promotes secure seaming of a metal lid. These problems and deficiencies are clearly felt in the art and are solved by the present invention in the manner described below.

### SUMMARY OF THE INVENTION

The present invention relates to a method for making a plastic container with a metal lid that can be used for packaging foods and beverages. A container body is first made by a conventional blow-molding process. The container body may have any suitable shape, such as a cylinder or a box. The container body has a flange, which may likewise be circular, rectangular or of other suitable shape. Conventional blow-molding inherently results in the flange tapering in thickness to some extent because the plastic generally cannot be forced completely into the thin groove of the mold that defines the flange. The flange is typically relatively uniform in thickness immediately adjacent the container body but becomes progressively thinner at distances further from the container body. To overcome the potential problems caused by a non-uniform flange thickness, the flange is molded to a width that is greater than necessary and then trimmed to the necessary size. In the trimming step, the width of the flange is reduced to leave only that portion of the flange that is uniform in thickness. In a cylindrical can, for example, a ring of material is removed from the outer circumference of the flange. A metal container lid is then seamed or crimped over the flange in the conventional manner. Seaming or crimping a conventional can lid onto a container body prepared in this manner forms a hermetic seal because the lid attaches much more evenly and securely to a flange that is uniformly thick than a flange that tapers in thickness.

Although any suitable machine may be used to trim the flange, a hot die-stamping machine provides some significant advantages, especially if the punch is allowed to linger on the flange long enough for a small bead to form in the edge. A bead may provide a more secure structure over which a lid can be crimped. A bead can also encapsulate the edges of any layers of a multilayer can, such as an oxygen-barrier layer, that might exposed remain exposed.

The foregoing, together with other features and advantages of the present invention, will become more apparent when referring to the following specification, claims, and accompanying drawings.

### BRIEF DESCRIPTION OF THE DRAWINGS

For a more complete understanding of the present invention, reference is now made to the following detailed description of the embodiments illustrated in the accompanying drawings, wherein:
Figure 1 is a flowchart of a method for making a plastic container having a metal lid;
Figure 2 is a sectional view of a portion of a container made in accordance with the present invention, showing a lid seamed or crimped onto a flange of the container body;
Figure 3 illustrates a blow-molding machine, with the mold for a container shown in cross-section;
Figure 4 is a top plan view of a lid for a can-like container;
Figure 5 is a generalized side elevational view of a heated die-stamping machine before engaging a container body to be die-stamped;
Figure 6 is similar to Fig. 5, showing the container body being die-stamped;
Figure 7 is a side elevational view of a portion of a container body, with the beaded flange shown separately in enlarged cross section;
Figure 8 is a generalized side elevational view of a lid seaming machine before engaging a container body:
Figure 9 is similar to Fig. 8, showing the lid being seamed or crimped over the flange of the container body; and
Figure 10 is similar to Figs. 8 and 9, showing the container body with the lid attached.

### DESCRIPTION OF A PREFERRED EMBODIMENT

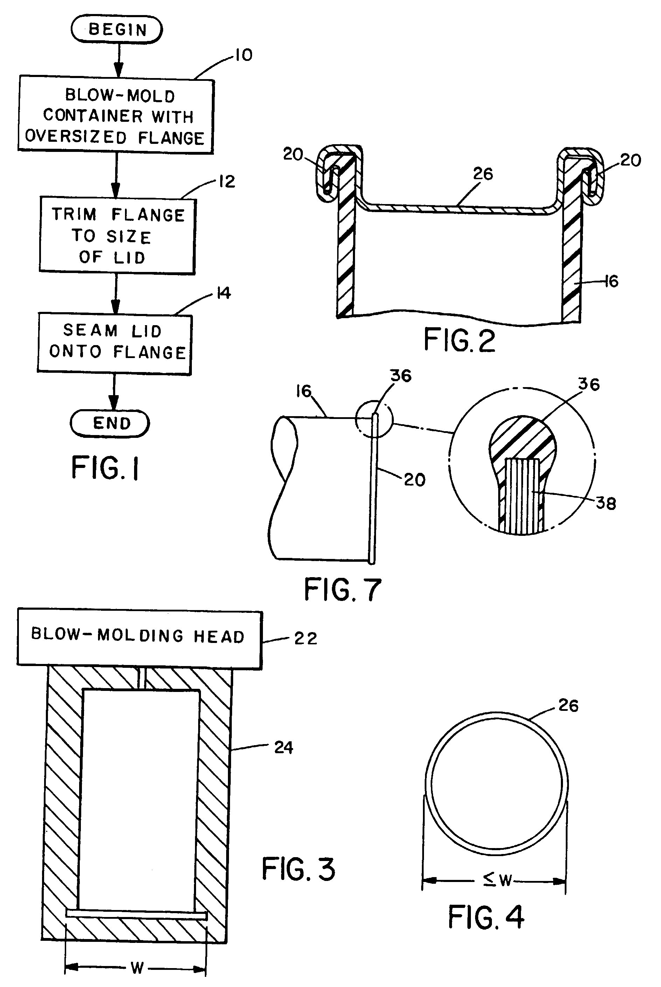

As illustrated in Fig. 1, the method generally comprises the step 10 of blow-molding a plastic container body having an oversized flange, the step 12 of trimming the flange to size, and the step 14 of seaming or crimping the lid onto the trimmed flange. The result, as illustrated in Fig. 2, is a plastic container body 16 with a metal cover or lid 26 crimped over a flange 20 of uniform thickness.

A conventional blow-molding machine 22 and mold 24, illustrated in Fig. 3, can be used to perform the blow-molding step. In the illustrated embodiment, mold 24 produces a cylindrical or can-like container body 16, but other known container shapes are suitable. Note that the portion of mold 24 defining the flange has a width or diameter "W" that is not less than the diameter or width of the lid 26 shown in Fig. 4. Container body 16 can be made with multiple layers, such as an oxygen barrier layer sandwiched between plastic or other outer layers, by using a multiple-head blow-molder. Such multiple-layer plastic container technology is familiar to persons of skill in the art to which the invention relates and is described in, for example, Blow Molding Handbook, edited by Donald Rosato and Dominick Rosato, Hanser Publishers. Lid 26 is a conventional metal can lid of the type used with conventional can seaming machines and familiar to persons of skill in the art.

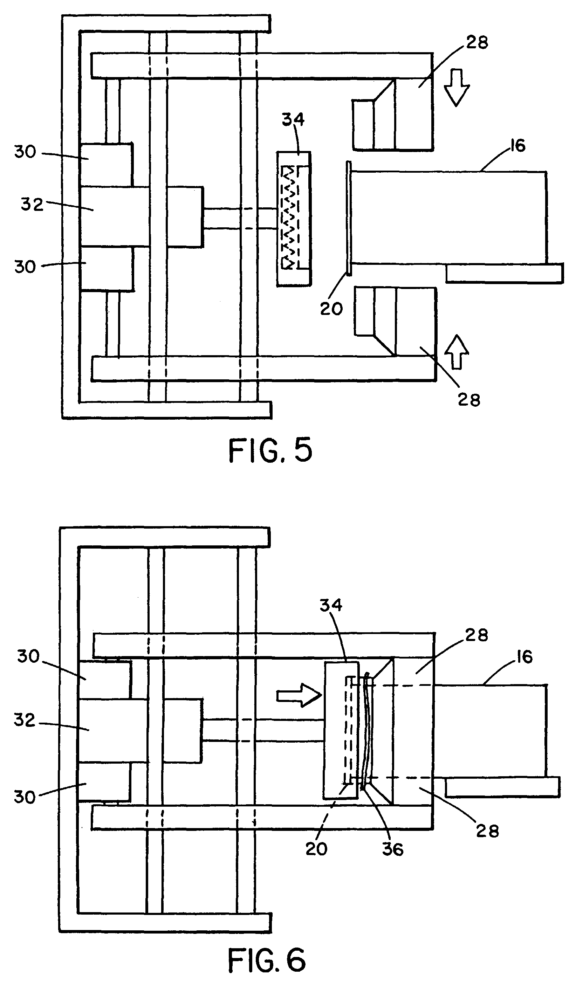

As illustrated in Figs. 5 and 6, a heated die-stamping machine can be used to perform the trimming step. The machine has a two-part generally cylindrical die 28 that can be closed by actuators 30 to retain a container body 16. The portion of flange 20 to be removed overhangs the rim of die 28. Another actuator 32 then causes an electrically heated punch 34 to impact flange 20, shearing it against the rim of die 28. The annular scrap piece 36 that is sheared off flange 20 is discarded or recycled.

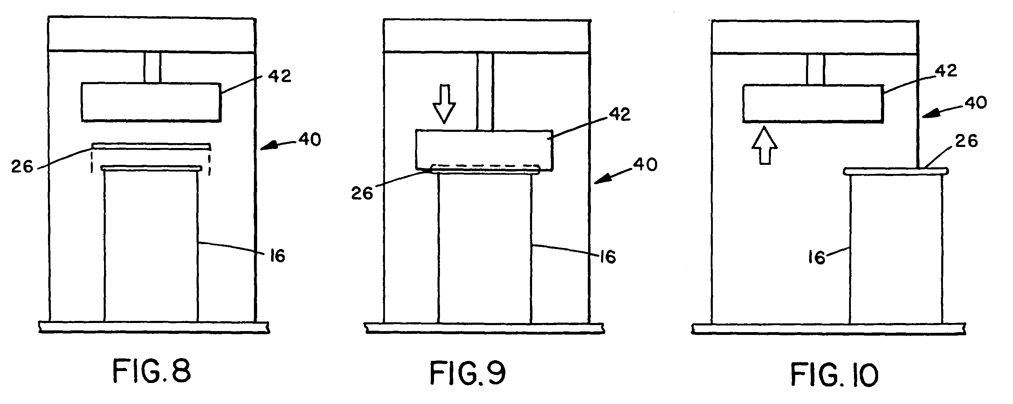

As illustrated in Fig. 7, a bead 36 can be developed around the periphery of the trimmed flange 20 by allowing heated punch 34 to remain in contact with flange 20 until the heated plastic flows and forms such a bead. Not only may bead 36 provide a better structure for lid 26 to grip when crimped over it, but bead 36 can also advantageously encapsulate the ends of internal layers 38 to protect them against degradation by oxygen in the atmosphere or container contents. Though shown more distinctly in Fig. 7 for purposes of illustration, layers 38 are melted or fused together at the perimeter of flange 20.

As illustrated in Figs. 8-10, a can seaming machine 40 of conventional design has a chuck 42. Lid 26 is first placed onto flange 20, as illustrated in Fig. 8. As illustrated in Fig. 9, chuck 42 then moves into contact with flange 20 and crimps lid 26 over flange 20 in the conventional manner to produce the sealed structure shown in Fig. 2. Although this crimping or seaming process is typically performed in two stages by machine 40, the details are omitted for purposes of clarity. Can seaming machine 40 and its operation are familiar to persons of skill in the art and therefore not described in further detail in this patent specification. The uniform shape and thickness of the trimmed flange 20 promotes a hermetic seal between lid 26 and container body 16 in the resulting sealed can shown in Fig. 10.

The present invention overcomes sealing problems that could otherwise occur if a metal lid were seamed or camped over the flange of a blow-molded plastic container body. By blow-molding a container body having an oversized flange and then trimming the flange to size before seaming on the lid, a hermetic seal is virtually assured.

Obviously, other embodiments and modifications of the present invention will occur readily to those of ordinary skill in the art in view of these teachings. Therefore, this invention is to be limited only by the following claims, which include all such other embodiments and modifications when viewed in conjunction with the above specification and accompanying drawings.

## Claims

1. A method for making a plastic container having a metal lid, comprising the steps of:
blow-molding a plastic container body having an end with a flange;
trimming said flange to reduce a width of said flange; and
crimping said metal container lid over said flange.

2. The method claimed in claim 1, wherein said trimming step comprises removing portions of said flange having a non-uniform thickness.

3. The method claimed in claim 1, wherein said trimming step comprises hot die-stamping said flange.

4. The method claimed in claim 3, wherein said trimming step further comprises maintaining a heated die against said flange until a bead forms on said flange.

5. The method claimed in claim 1, wherein said flange is annular.

6. The method claimed in claim 1, wherein said container body has multiple layers including an oxygen-barrier layer.

7. The method claimed in claim 6, wherein said trimming step further comprises maintaining a heated die against said flange until a bead forms on said flange, said bead encapsulating edges of said layers.
